# EUROPÄISCHE PATENTANMELDUNG

(11) **EP 3 225 789 A1**
(43) Veröffentlichungstag der Anmeldung: **04.10.2017**
(21) Anmeldenummer: 17160797.1
(22) Anmeldetag: 14.03.2017
(51) Int. Cl.: F01D 21/04, F01D 25/24, F02C 7/045

(54) **TRIEBWERKSBAUGRUPPE MIT FANGEHÄUSE UND EINLAUFDIFFUSOR**

(30) Priorität: 01.04.2016 DE 102016105957
(71) Anmelder: Rolls-Royce Deutschland Ltd & Co KG, 15827 Blankenfelde-Mahlow (DE)
(72) Erfinder: WIRTH, Moritz, 12101 Berlin (DE)
(74) Vertreter: Müller, Wolfram Hubertus

(57) **Zusammenfassung**

Die Erfindung betrifft ein Fangehäuse (2) eines Turbofantriebwerks, das innenseitig eine Innenraumfläche (27) ausbildet, die einen Strömungspfad durch den Fan (10) des Turbofantriebwerks radial außen begrenzt, wobei das Fangehäuse (2) einen stromaufwärts angeordneten Gehäuseanfang (24) aufweist. Es ist vorgesehen, dass die Innenraumfläche (27) des Fangehäuses (2) unmittelbar angrenzend an den Gehäuseanfang (24) einen divergenten Querschnittsflächenverlauf des Strömungspfads realisiert und geeignet ist, einen Einlaufdiffusor (12) eines Triebwerkseinlaufs (11), der stromaufwärts des Fangehäuses (2) angeordnet ist, in den Bereich des Fangehäuses (2) kontinuierlich zu verlängern. Die Erfindung betrifft des Weiteren eine Triebwerksbaugruppe mit einem Fangehäuse und einem Triebwerkseinlauf.

## Beschreibung

Die Erfindung betrifft ein Fangehäuse gemäß dem Oberbegriff des Patentanspruchs 1 und eine Triebwerksbaugruppe mit einem Fangehäuse.

Ein Turbofantriebwerk weist eingangsseitig einen Triebwerkseinlauf auf, der einströmende Luft einem Fan zuführt. Der Fan ist an seinem Umfang von einem Fangehäuse umgeben. Es ist bekannt, den Triebwerkseinlauf als Diffusor auszubilden, um den Luftstrom in axialer Richtung vor dem Fan zu verlangsamen. Es ist weiter z.B. aus der US 2015/0128604 A1 bekannt, die Innenfläche des Fangehäuses stromaufwärts des Fans mit einem konstanten Durchmesser zu versehen, so dass unmittelbar vor dem Fan ein zylindrischer Strömungskanal bereitgestellt ist. Eine solche zylindrische Form erlaubt es, den Fan bei der Triebwerksmontage von vorne in das Triebwerk und das Fangehäuse einzuschieben. Der Durchmesser des Fangehäuses ist dabei geringfügig größer als der größte Durchmesser des Fan Rotors, so dass der Fan Rotor in das Fangehäuse eingeschoben werden kann. Nach Positionieren des Fan Rotors im Fangehäuse wird stromaufwärts des Fangehäuses der Triebwerkseinlauf mit dem Fangehäuse verbunden.

Der vorliegenden Erfindung liegt die Aufgabe zu Grunde, die Strömungsverhältnisse vor dem Fan eines Turbofantriebwerks weiter zu verbessern.

Diese Aufgabe wird durch ein Fangehäuse mit den Merkmalen des Anspruchs 1 und eine Triebwerksbaugruppe mit den Merkmalen des Anspruchs 6 gelöst. Ausgestaltungen der Erfindung sind in den Unteransprüchen angegeben.

Danach betrachtet die vorliegende Erfindung gemäß einem ersten Erfindungsaspekt ein Fangehäuse eines Turbofantriebwerks, das innenseitig eine Innenraumfläche ausbildet, die einen Strömungspfad durch den Fan des Turbofantriebwerks radial außen begrenzt. Eine solche Innenraumfläche kann auch als Strömungspfadberandung bezeichnet werden. Sie wird durch eine Wandkontur des Fangehäuses gebildet. Das Fangehäuse weist dabei einen stromaufwärts angeordneten Gehäuseanfang auf, der den Anfang der axialen Erstreckung des Fangehäuses kennzeichnet. Es ist vorgesehen, dass die Innenraumfläche des Fangehäuses unmittelbar angrenzend an den Gehäuseanfang einen divergenten Querschnittsflächenverlauf des Strömungspfads realisiert und geeignet ist, einen Einlaufdiffusor eines Triebwerkseinlaufs, der stromaufwärts des Fangehäuses angeordnet ist, in den Bereich des Fangehäuses kontinuierlich zu verlängern.

Die Erfindung beruht somit auf dem Gedanken, die Strömungsverhältnisse der dem Fan zuströmenden Luft dadurch zu verbessern, dass der Einlaufdiffusor des Triebwerkseinlaufs in den Bereich des Fangehäuses verlängert wird. Durch die Verlängerung des Einlaufdiffusors kann der Diffusor sanfter ausgebildet werden mit der Folge, dass die Dicke der Grenzschicht an der Strömungspfadberandung minimiert werden kann. Dabei wird der Massenstrom durch den Fan erhöht.

Zur Verlängerung des Einlaufdiffusors verläuft die Innenraumfläche des Fangehäuses unmittelbar angrenzend an den Gehäuseanfang divergent, so dass die Querschnittsfläche des Strömungskanals, den die Innenraumfläche des Fangehäuses umschließt, in axialer Richtung hinter dem Gehäuseanfang zunimmt. Der Übergang zwischen dem Teil des Eingangsdiffusors, den der Triebwerkseinlauf ausbildet, und dem Teil des Eingangsdiffusors, den erfindungsgemäß das Fangehäuse ausbildet, ist dabei kontinuierlich divergent ausgebildet, bildet also keinen Bereich aus, in dem die Querschnittsfläche konstant verläuft. Dabei ist der Übergang im mathematischen Sinne glatt, d.h. die Innenfläche weist auch am Übergang keine Kanten auf. Auch kann der Übergang krümmungsstetig ausgebildet sein, d.h. die Innenfläche vor und hinter dem Übergang die gleiche Krümmung aufweisen.

Gemäß einer Ausgestaltung der Erfindung weist das Fangehäuse an der Innenraumfläche einen ersten Bereich und einen sich daran in axialer Richtung anschließenden zweiten Bereich auf, wobei der erste Bereich sich stromabwärts an den Gehäuseanfang anschließt und der zweite Bereich in radialer Richtung an die Schaufelspitzen der Fanschaufeln des Fans angrenzt. Dabei ist der divergente Querschnittsflächenverlauf im ersten Bereich ausgebildet.

Dabei kann vorgesehen sein, dass die Querschnittsfläche im ersten Bereich der Innenraumfläche angrenzend an den Gehäuseanfang in Strömungsrichtung zunächst zunimmt und zum zweiten Bereich der Innenraumfläche hin wieder abnimmt. Beispielsweise wird der divergente Querschnittsflächenverlauf durch eine zum Strömungspfad hin konkave Form des ersten Bereichs der Innenraumfläche bereitgestellt. Eine solche konkave Form kann beispielsweise eine flache Nut, die die Innenraumfläche im ersten Bereich ausbildet, bereitgestellt sein, wobei eine solche Nut am Anfang des zweiten Bereiches oder davor endet.

Eine weitere Ausgestaltung der Erfindung sieht vor, dass die Innenraumfläche am Gehäuseanfang einen ersten Radius R1 aufweist, die Innenraumfläche im ersten Bereich einen ersten maximalen Radius R2 aufweist und die Fanschaufeln des Fans einen zweiten maximalen Radius R3 aufweisen, wobei gilt, dass
- der erste Radius R1 größer ist als der zweite maximale Radius R3,
- der erste maximale Radius R2 größer ist als der erste Radius R1 und
- der erste maximale Radius R2 größer als der zweite maximale Radius R3.
(R1 > R3; R2 > R1; R2 > R3)

Der zweite maximale Radius R3 entspricht dabei der größten radialen Erstreckung der Schaufelspitzen der Fanschaufeln. Da R3 kleiner ist als R1 und R2 ist es problemlos möglich, den Fan Rotor bei der Montage von der stromaufwärts angeordneten Stirnseite des Fangehäuses in das Fangehäuse einzuschieben.

Gemäß einer Ausgestaltung der Erfindung sind die dem ersten Bereich zugehörigen Gehäusekomponenten des Fangehäuses dazu ausgebildet, im Fall eines Fanschaufelbruchs Fanbruchstücke aufzunehmen und daran zu hindern, die Triebwerksgondel, die das Fangehäuse umgibt, nach außen zu durchschlagen. Im ersten Bereich bildet das Fangehäuse somit einen Sicherheitsbereich aus, auch als "Fan Case Forward Length" bezeichnet, der strukturell geeignet ist, Fanbruchstücke aufzunehmen. Beispielsweise besteht das Fangehäuse hierzu aus einer Aluminiumlegierung. Es kann dabei vorgesehen sein, dass auch Gehäusekomponenten, die anderen Bereichen des Fangehäuses zugehören, insbesondere Gehäusekomponenten, die dem zweiten Bereich zugehören oder stromabwärts an diesen angrenzen, dazu ausgebildet sind, im Fall eines Fanschaufelbruchs Fanbruchstücke aufzunehmen und daran zu hindern, die Triebwerksgondel nach außen zu durchschlagen, so dass der genannte Sicherheitsbereich erweitert ist und auch im zweiten Bereich und ggf. weiteren Bereichen des Fangehäuses realisiert ist.

Eine weitere Ausgestaltung der Erfindung sieht vor, dass das Fangehäuse angrenzend an den Gehäuseanfang ein schallabsorbierendes Paneel (auch als "forward acoustic panel" bezeichnet) aufweist, wobei der angrenzend an den Gehäuseanfang divergente Querschnittsflächenverlauf zumindest teilweise im Bereich des Paneels ausgebildet ist. Das schallabsorbierende Paneel stellt dabei eine Komponente des Fangehäuses dar und ist ausschließlich mit einer oder mehreren strukturellen Gehäusekomponenten des Fangehäuses verbunden. Die Innenwandung des Paneels bildet somit bei dieser Ausführungsvariante die Verlängerung des Einlaufdiffusors aus. Der Einlaufdiffusor kann dabei im Bereich des Paneels enden oder sich über dieses hinaus erstrecken. Die Verwendung eines schallabsorbierenden Paneels am Eingang des Fangehäuses stellt eine Maßnahme dar, um den Triebwerkslärm zu reduzieren.

Das Fangehäuse weist gemäß einer Ausführungsvariante am stromaufwärts angeordneten Gehäuseanfang eine Befestigungsstruktur zur Befestigung eines Triebwerkseinlaufs am Fangehäuse auf. Die Befestigungsstruktur ist beispielsweise als Flansch ausgebildet.

Die Erfindung betrifft in einem zweiten Erfindungsaspekt eine Triebwerksbaugruppe, die aufweist:
- ein Fangehäuse, das innenseitig eine Innenraumfläche ausbildet, die einen Strömungspfad durch den Fan des Turbofantriebwerks radial außen begrenzt, wobei das Fangehäuse einen stromaufwärts angeordneten Gehäuseanfang aufweist, und
- einen mit dem Fangehäuse stromaufwärts verbundenen Triebwerkseinlauf, der stromaufwärts der Verbindung zwischen Fangehäuse und Triebwerkseinlauf über eine definierte Länge einen Einlaufdiffusor ausbildet,
- wobei der Einlaufdiffusor in axialer Richtung in den Bereich des Fangehäuses hinein kontinuierlich verlängert ist.

Gemäß einer ersten Ausgestaltung dieser Erfindungsvariante ist vorgesehen, dass die Innenraumfläche des Fangehäuses unmittelbar angrenzend an den Gehäuseanfang einen divergenter Querschnittsflächenverlauf realisiert und dabei den Einlaufdiffusor, den der Triebwerkseinlauf bildet, in den Bereich des Fangehäuses verlängert.

Gemäß einer zweiten Ausgestaltung dieser Erfindungsvariante ist vorgesehen, dass die Triebwerksbaugruppe derart ausgebildet ist, dass
- das Fangehäuse am Gehäuseanfang eine erste Befestigungsstruktur zur Verbindung mit dem Triebwerkeinlauf aufweist,
- der Triebwerkseinlauf ein stromabwärts angeordnetes Einlaufende ausbildet,
- der Triebwerkseinlauf am Einlaufende eine zweite Befestigungsstruktur zur Verbindung mit dem Fangehäuse aufweist,
- wobei die miteinander verbundenen ersten und zweiten Befestigungsstrukturen eine axiale Position ausbilden, an der das Einlaufende des Triebwerkseinlaufs und der Gehäuseanfang des Fangehäuses miteinander verbunden sind,
- der Triebwerkseinlauf stromabwärts des Einlaufendes eine Verlängerungsstruktur ausbildet, die den Einlaufdiffusor in axialer Richtung verlängert, und
- die Verlängerungsstruktur im zusammengebauten Zustand sich stromabwärts der axialen Position der Verbindungsstruktur erstreckt, so dass der Einlaufdiffusor in axialer Richtung in den Bereich des Fangehäuses hinein verlängert ist.

In einer Ausgestaltung der Erfindung wird die Verlängerungsstruktur durch ein schallabsorbierendes Paneel gebildet ist. Dieses ragt bei dieser Erfindungsvariante gewissermaßen vom Triebwerkseinlauf in das Fangehäuse hinein, wobei das Paneel mit seiner Innenwandung die Verlängerung des Einlaufdiffusors ausbildet.

Gemäß einer weiteren Ausgestaltung ist vorgesehen, dass das Fangehäuse an der Innenraumfläche einen zweiten Bereich aufweist, der in radialer Richtung an die Fanschaufeln des Fans angrenzt, wobei die Verlängerungsstruktur des Triebwerkseinlaufs sich in axialer Richtung maximal bis zu diesem zweiten Bereich erstreckt. Die Verlängerungsstruktur, die wie erläutert beispielsweise durch ein schallabsorbierendes Paneel gebildet ist, erstreckt sich somit maximal bis zu dem Bereich der Innenraumfläche des Fangehäuses, der radial außen an die Fanschaufeln angrenzt. Sie muss sich aber keineswegs bis in diesen zweiten Bereich erstrecken und kann auch stromaufwärts dieses zweiten Bereichs enden.

Die erste Befestigungsstruktur und die zweite Befestigungsstruktur sind in einer Ausgestaltung der Erfindung jeweils Flansche. Sie bilden im verbundenen Zustand eine Flanschverbindung. Die Verlängerungsstruktur des Triebwerkseinlaufs erstreckt sich gemäß dieser Ausführungsvariante somit in axialer Richtung über die Flanschverbindung hinaus.

In einem weiteren Erfindungsaspekt betrifft die Erfindung ein Turbofantriebwerk mit einer erfindungsgemäßen Triebwerksbaugruppe.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks;
- Figur 2: eine Baugruppe eines Turbofantriebwerks, die einen Triebwerkseinlauf und ein Fangehäuse umfasst, gemäß dem Stand der Technik;
- Figur 3: eine weitere Baugruppe eines Turbofantriebwerks, die einen Triebwerkseinlauf und ein Fangehäuse umfasst, gemäß dem Stand der Technik;
- Figur 4: eine Baugruppe eines Turbofantriebwerks, die einen Triebwerkseinlauf und ein Fangehäuse umfasst, gemäß einem ersten Ausführungsbeispiel der Erfindung; und
- Figur 5: eine Baugruppe eines Turbofantriebwerks, die einen Triebwerkseinlauf und ein Fangehäuse umfasst, gemäß einem zweiten Ausführungsbeispiel der Erfindung.

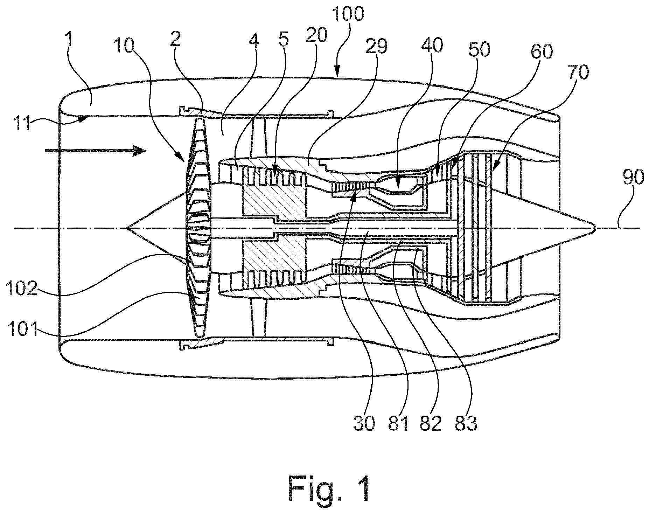

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eingangsseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk, das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Die beschriebenen Komponenten besitzen eine gemeinsame Symmetrieachse 90. Die Symmetrieachse 90 definiert eine axiale Richtung des Turbofantriebwerks. Eine radiale Richtung des Turbofantriebwerks verläuft senkrecht zur axialen Richtung.

Im Kontext der vorliegenden Erfindung sind die Ausgestaltung des Fangehäuses 2 und des Triebwerkeinlaufs 11 von besonderer Bedeutung, wie nachfolgend erläutert werden wird.

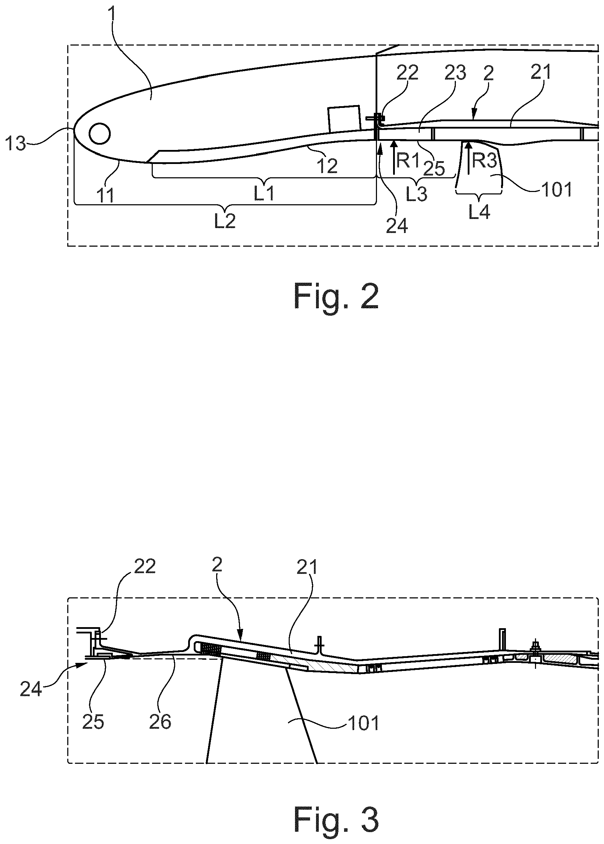

Zum besseren Verständnis der Erfindung werden anhand der Figuren 2 und 3 zunächst zwei Fangehäuse gemäß dem Stand der Technik beschrieben.

Die Figur 2 zeigt einen Abschnitt einer Triebwerksgondel 1, die einen Triebwerkseinlauf 11 und ein Fangehäuse 2 umfasst. Der Triebwerkseinlauf 11 umfasst am Eingang des Triebwerks Einlauflippen 13. Daran anschließend bildet der Triebwerkseinlauf 11 einen Einlaufdiffusor 12 aus, in dem die Querschnittsfläche des Strömungspfads, den der Einlaufdiffusor 12 radial außen begrenzt, kontinuierlich zunimmt. Der Einlaufdiffusor 12 wird dabei durch die Innenwand des Triebwerkseinlaufs 11 gebildet.

Die Länge des Triebwerkseinlaufs 11 ist in der Figur 2 mit L2 und die Länge des Einlaufdiffusors mit L1 angegeben.

Das Fangehäuse 2 umfasst strukturelle Gehäusekomponenten 21, die lediglich schematisch dargestellt sind und auf deren genauen Aufbau es für die Erfindung nicht ankommt. Das Fangehäuse 2 bildet innenseitig eine Innenraumfläche 25 aus, die den Strömungspfad durch das Turbofantriebwerk im Bereich des Fangehäuses 2 radial außen begrenzt. Die Innenraumfläche 25 ist in axialer Richtung in zwei Bereiche unterteilt, die den Längen L3 und L4 entsprechen und nachfolgend als L3 und L4 bezeichnet werden. Der erste Bereich L3 erstreckt sich von einem stromaufwärts angeordneten Gehäuseanfang 24 des Fangehäuses 2 bis zum zweiten Bereich L4. Der zweite Bereich L4 ist gekennzeichnet durch seine Lage radial außen angrenzend an die Fanschaufeln 101 des Fans.

Im ersten Bereich L3 weist die Innenraumfläche 25 einen konstanten Durchmesser bzw. Radius R1 auf, d.h. die Innenraumfläche 25 in diesem Bereich L3 ist zylinderförmig ausgebildet. Die Fanschaufeln 101 weisen an den Schaufelspitzen einen maximalen Radius R3 auf, wobei gilt, dass R1 größer als R3 ist. Dies erlaubt es, den fertig montierten Fan 10 (vgl. Figur 1) zu einem späten Zeitpunkt der Triebwerksherstellung in das Fangehäuse 2 von vorne einzuschieben. Anschließend wird der Treibwerkseinlauf 11 mit dem Fangehäuse 2 verbunden, was beispielsweise über eine Flanschverbindung 22 erfolgt. Die Flanschverbindung 22 wird auch als A1-Verbindung bezeichnet.

Es wird darauf hingewiesen, dass die dem ersten Bereich L3 zugehörigen Gehäusekomponenten des Fangehäuses 2 strukturell derart ausgebildet sind, dass sie geeignet sind, im Falle eines Fanschaufelbruchs Fanbruchstücke aufzunehmen und daran zu hindern, die Triebwerksgondel 1 nach außen zu durchschlagen. Der erste Bereich L3 ist für diese Zwecke notwendig, so dass auf ihn nicht verzichtet werden kann. Der erste Bereich wird auch als "fan case forward length" bezeichnet. Natürlich können auch die anderen Bereiche des Fangehäuses 2 derart ausgebildet sein, dass sie im Falle eines Fanschaufelbruchs Fanbruchstücke aufnehmen können.

Weiter wird darauf hingewiesen, dass der erste Bereich L3 der Innenraumfläche 25 ein schallabsorbierendes Paneel 23 aufweisen kann. Dieses ist typischerweise unmittelbar angrenzend an den Gehäuseanfang 24 ausgebildet.

Ein Fangehäuse 2 mit einer stromaufwärts als Zylinder ausgeführten Innenraumfläche 25 ist beispielsweise bei den Rolls-Royce Triebwerken BR710, BR715, BR725 und Trent 900 realisiert.

Die Figur 3 zeigt eine Abwandlung des Fangehäuses der Figur 2, bei der die Innenraumfläche des Fangehäuses wie bei der Figur 2 derart ausgebildet ist, dass sich an den Gehäuseanfang 24 eine zylinderförmige Innenraumfläche 25 mit konstantem Durchmesser bzw. Radius anschließt. Dieser zylindrische Bereich 25 erstreckt sich allerdings nicht bis zu dem Bereich, der radial an die Fanschaufeln 101 angrenzt. So ist zusätzlich ein Bereich mit einer Innenraumfläche 26 vorgesehen, der sich in axialer Richtung an den zylindrischen Bereich 25 anschließt und in dem die Innenraumfläche 26 als flache Nut ausgebildet ist, in der der Radius der Innenraumfläche 26 zu- und dann wieder abnimmt. Ein solches Fangehäuse weist das Triebwerk IAE V2500 A5 auf.

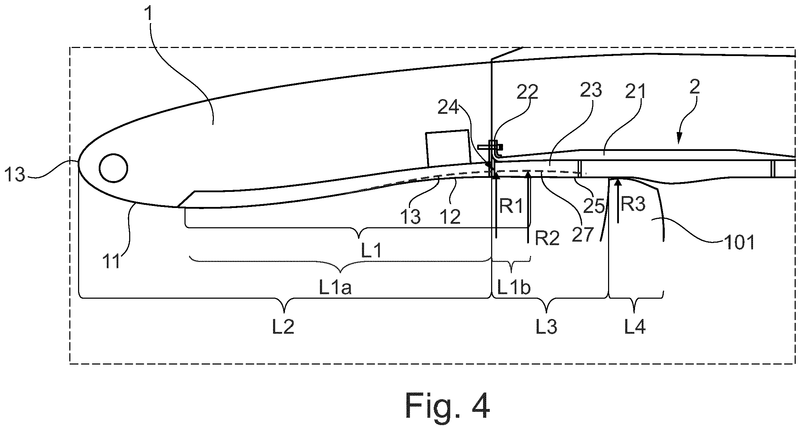

Die Figur 4 zeigt ein erstes Ausführungsbeispiel der Erfindung. Eine Triebwerksgondel 1 weist einen Triebwerkseinlauf 11 und ein Fangehäuse 2 auf. Der Triebwerkseinlauf 11 umfasst am Eingang des Triebwerks Einlauflippen 13. Daran anschließend bildet der Triebwerkseinlauf 11 einen Einlaufdiffusor 13 aus, in dem die Querschnittsfläche des Strömungspfads, den der Einlaufdiffusor 12 radial außen begrenzt, kontinuierlich zunimmt.

Das Fangehäuse 2 umfasst strukturelle Gehäusekomponenten 21. Es bildet innenseitig eine Innenraumfläche 27 aus, die den Strömungspfad durch das Turbofantriebwerk im Bereich des Fangehäuses 2 radial außen begrenzt. Das Fangehäuse 2 umfasst einen stromaufwärts angeordneten Gehäuseanfang 24. Die Innenraumfläche 27 ist wie bei der Figur 2 in axialer Richtung in zwei Bereiche unterteilt, die den Längen L3 und L4 entsprechen und als L3 und L4 bezeichnet werden. Der erste Bereich L3 erstreckt sich von dem stromaufwärts angeordneten Gehäuseanfang 24 des Fangehäuses 2 bis zum zweiten Bereich L4. Der zweite Bereich L4 ist gekennzeichnet durch seine Lage radial außen angrenzend an die Fanschaufeln 101 des Fans.

Die Verbindung zwischen dem Triebwerkseinlauf 11 und dem Fangehäuse 2 erfolgt über eine Verbindungsstruktur 22, beispielsweise eine Flanschverbindung, die auch als A1-Verbindung bezeichnet wird. Die Verbindungsstruktur 22 verbindet ein Einlaufende des Triebwerkseinlaufs 11 und den Gehäuseanfang 24 des Fangehäuses 2.

Anders als bei der Figur 2 ist vorgesehen, dass die Innenraumfläche 27 des Fangehäuses 2 unmittelbar angrenzend an den Gehäuseanfang 24 einen divergenten Querschnittsflächenverlauf des Strömungspfads realisiert. Dadurch bildet die Innenraumfläche eine kontinuierliche Verlängerung des Einlaufdiffusors 13 des Triebwerkseinlaufs 11. Der Einlaufdiffusor ist gegenüber dem in den Figuren 2 und 3 dargestellten Stand der Technik als verlängerter Einlaufdiffusor ausgebildet, der einen Bereich 13 aufweist, der im Triebwerkseinlauf 13 realisiert ist, und einen Bereich 27 aufweist, der sich in das Fangehäuse 2 erstreckt.

So weist der Einlaufdiffusor eine Gesamtlänge L1 auf, die zwei Teilbereiche L1a und L1b umfasst, wobei der Teilbereich L1a durch die Innenraumfläche 13 des Einlaufdiffusors und der Teilbereich 1 b durch die Innenraumfläche 27 begrenzt wird. Der Teilbereich L1a erstreckt sich dementsprechend stromaufwärts der Verbindungsstruktur 22. Der Teilbereich L1b erstreckt sich stromabwärts der Verbindungsstruktur 22. Die Länge des Triebwerkseinlaufs 11 ist mit L2 bezeichnet.

Es wird darauf hingewiesen, dass zur besseren Verdeutlichung der Erfindung in der Figur 4 ebenfalls die Innenraumflächen 12, 25 entsprechend dem in Bezug auf die Figur 2 erläuterten Stand der Technik dargestellt sind. Der erfindungsgemäße Innenwandverlauf 13, 27 ist demgegenüber gestrichelt dargestellt.

Gemäß der Figur 4 ist der divergente Innenwandbereich L1b im an den Gehäuseanfang 24 angrenzenden Abschnitt des ersten Bereichs L3 ausgebildet. Der divergente Querschnittsflächenverlauf ist somit in Strömungsrichtung betrachtet am Anfang des ersten Bereichs L3 ausgebildet. Dabei nimmt die Querschnittsfläche im ersten Bereich L3 angrenzend an den Gehäuseanfang 24 in Strömungsrichtung zunächst zu (bis zum Ende des Bereichs L1b) und zum zweiten Bereich L4 hin wieder ab. Hierzu weist der erste Bereich L3 zum Strömungspfad hin eine konkave Form auf. Diese wird beispielsweise durch eine flache Nut gebildet.

Die Innenraumfläche 27 weist am Gehäuseanfang 24 einen ersten Radius R1 und im ersten Bereich L3 einen ersten maximalen Radius R2 auf. Der maximale Radius R2 befindet sich dabei am Ende des Bereichs L1b, entspricht also der größten Querschnittsfläche des Strömungspfads. Des Weiteren weisen die Fanschaufeln 101 des Fans einen zweiten maximalen Radius R3 auf. Es gilt, dass der erste Radius R1 größer ist als der zweite maximale Radius R3 und dass der erste maximale Radius R2 größer ist sowohl als der erste Radius R1 als auch als der zweite maximale Radius R3. Damit ist sichergestellt, dass der fertig zusammengebaute Fan bei der Montage von vorne in das Fangehäuse eingeschoben werden kann.

Es wird darauf hingewiesen, dass das Fangehäuse 2 gemäß der Ausgestaltung der Figur 4 angrenzend an den Gehäuseanfang 24 ein schallabsorbierendes Paneel 23 aufweist. Dementsprechend ist der divergente Querschnittsflächenverlauf zumindest teilweise im Bereich des Paneels 23 ausgebildet. Dies ist aber nur beispielhaft zu verstehen. Wenn kein solches Paneel 23 vorhanden ist, ist der divergente Querschnittsflächenverlauf durch andere Strukturen der Innenwand des Fangehäuses 2 gebildet. Auch wird darauf hingewiesen, dass in alternativen Ausgestaltungen vorgesehen sein kann, dass der divergente Querschnittsflächenverlauf sich über größere axiale Bereiche des Paneels 23 oder sogar über dieses hinaus erstreckt.

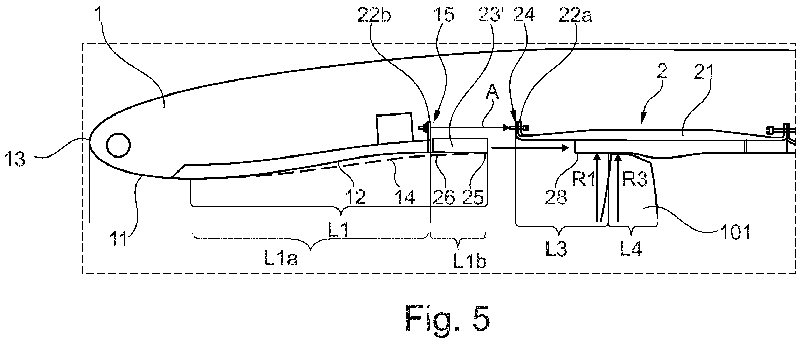

Die Figur 5 zeigt ein weiteres Ausführungsbeispiel der Erfindung, das einen Diffusor realisiert, der dadurch verlängert ist, dass er sich kontinuierlich bis in das Fangehäuse 2 erstreckt. Der Unterschied zum Ausführungsbeispiel der Figur 4 besteht darin, dass die im Fangehäuse 2 angeordnete Struktur, die die Verlängerung des Diffusors bereitstellt, durch einen Teil des Triebwerkseinlaufs 11 gebildet ist.

Es ist vorgesehen, dass das Fangehäuse 2 am Gehäuseanfang 24 eine erste Befestigungsstruktur 22a zur Verbindung mit dem Triebwerkeinlauf 11 aufweist. Der Triebwerkseinlauf 11 weist ein stromabwärts angeordnetes Einlaufende 15 auf. Am Einlaufende 15 ist eine zweite Befestigungsstruktur 22b zur Verbindung mit dem Fangehäuse 2 vorgesehen. Dabei bilden die miteinander verbundenen ersten und zweiten Befestigungsstrukturen 22a, 22b eine Verbindungsstruktur aus (entsprechend der Verbindungsstruktur 22 der Figur 4), an der das Einlaufende 15 des Triebwerkseinlaufs 11 und der Gehäuseanfang 24 des Fangehäuses 2 miteinander verbunden sind.

Der Triebwerkseinlauf 11 bildet wiederum über eine definierte Länge L1a stromaufwärts der Befestigungsstruktur 22b einen Einlaufdiffusor 14 aus. Es ist vorgesehen, dass der Triebwerkseinlauf 11 darüber hinaus stromabwärts des Einlaufendes 15 eine Verlängerungsstruktur 23' ausbildet, die den Einlaufdiffusor 14 in axialer Richtung verlängert und die Länge L1b aufweist. Diese Verlängerungsstruktur 23' erstreckt sich stromabwärts der zweiten Befestigungsstruktur 22b. Sie bildet eine Innenraumfläche 26 aus, die einen divergenten Querschnittsflächenverlauf des Strömungspfads realisiert. Dadurch wird im zusammengebauten Zustand der Einlaufdiffusor in axialer Richtung in den Bereich des Fangehäuses 2 kontinuierlich hinein verlängert, wobei der Einlaufdiffusor der Gesamtlänge L1 durch die Innenraumflächen 14 und 26 bzw. die Längen L1a und L1b gebildet ist.

Auch bei der Figur 5 sind zur besseren Verdeutlichung der Erfindung die Innenraumflächen 12, 25 entsprechend dem in Bezug auf die Figur 2 erläuterten Stand der Technik dargestellt. Der erfindungsgemäße Innenwandverlauf 14, 26 ist demgegenüber gestrichelt dargestellt.

Bei dem Ausführungsbeispiel der Figur 5 ist die Verlängerungsstruktur 23' durch ein schallabsorbierendes Paneel gebildet. Dies ist aber nicht notwendigerweise der Fall. Grundsätzlich kann auch eine andere Struktur, deren Innenraumfläche divergent ausgebildet ist, sich an das Einlaufende 15 anschließen.

Die Verlängerungsstruktur 23' des Triebwerkseinlaufs 11 erstreckt sich in axialer Richtung maximal bis zu dem zweiten Bereich L4 des Fangehäuses 2, der in radialer Richtung an die Fanschaufeln 101 des Fans angrenzt. Wie in der Figur 5 dargestellt, muss sich die Verlängerungsstruktur aber nicht so weit erstrecken und kann stromaufwärts des zweiten Bereichs L4 enden.

Die Innenraumfläche des Fangehäuses 2 ist in der Figur 5 mit dem Bezugszeichen 28 gekennzeichnet. Sie ist beim Ausführungsbeispiel der Figur 5 aber nicht divergent ausgebildet, da die Divergenz zur Verlängerung des Einlaufdiffusors durch die Verlängerungsstruktur 23' bereitgestellt wird. Dementsprechend weist die Innenraumfläche 28 stromaufwärts vor dem Fan einen Radius R1 auf, der konstant ist und dabei größer als der größte Radius R3 der Fanschaufeln 101.

Bei der Montage werden der Treibwerkseinlauf 11 und das Fangehäuse 2 in Richtung des Pfeils A zueinander verschoben. Die erste Befestigungsstruktur 22a und die zweite Befestigungsstruktur 22b sind jeweils Flansche und bilden im verbundenen Zustand eine Flanschverbindung (entsprechend der Flanschverbindung 22 der Figur 4). Die Verlängerungsstruktur 23' erstreckt sich in axialer Richtung über die Flanschverbindung hinaus in das Fangehäuse 2 und bildet dort eine Verlängerung des Einlaufdiffusors.

Für sämtliche beschriebenen Ausführungsbeispiele der Erfindung gilt, dass die Verlängerung des Einlaufdiffusors in axialer Richtung in den Bereich des Fangehäuses hinein derart ausgebildet ist, dass der Einlaufdiffusor einen kontinuierlich divergenten Querschnittsflächenverlauf im Übergangsbereich zwischen dem Triebwerkseinlauf und dem Fangehäuse aufweist. Der Durchmesser bzw. Radius des Diffusors nimmt somit kontinuierlich zu, ohne Plateaus mit konstantem Durchmesser auszubilden. Die Innenwandung des Diffusors ist dabei auch im Übergangsbereich zwischen dem Bereich des Einlaufdiffusors, der im Triebwerkseinlauf realisiert ist, und dem Bereich des Einlaufdiffusors, der im Fangehäuse realisiert ist, glatt und ohne Kanten.

Gleichzeitig wird darauf hingewiesen, dass die Divergenz im Bereich des Einlaufdiffusors, der im Fangehäuse 2 realisiert ist, nicht sehr stark ausgebildet sein muss. Beispielsweise liegt die Abweichung von einem zylindrischen Verlauf der Innenraumfläche angrenzend an den Gehäuseanfang 24 zwischen 0.5° und 4°, insbesondere zwischen 1° und 2°.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise sind Verlauf und Divergenzgrad des Einlaufdiffusors sowie der beschriebene Aufbau von Fangehäuse und Triebwerkseinlauf nur als Beispiele zu verstehen.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Fangehäuse (2) eines Turbofantriebwerks, das innenseitig eine Innenraumfläche (27) ausbildet, die einen Strömungspfad durch den Fan (10) des Turbofantriebwerks radial außen begrenzt, wobei das Fangehäuse (2) einen stromaufwärts angeordneten Gehäuseanfang (24) aufweist,
**dadurch gekennzeichnet,**
**dass** die Innenraumfläche (27) des Fangehäuses (2) unmittelbar angrenzend an den Gehäuseanfang (24) einen divergenten Querschnittsflächenverlauf des Strömungspfads realisiert und geeignet ist, einen Einlaufdiffusor (13) eines Triebwerkseinlaufs (11), der stromaufwärts des Fangehäuses (2) angeordnet ist, in den Bereich des Fangehäuses (2) kontinuierlich zu verlängern.

2. Fangehäuse nach Anspruch 1, **dadurch gekennzeichnet, dass** das Fangehäuse (2) an der Innenraumfläche (27) einen ersten Bereich (L3) und einen sich daran in axialer Richtung anschließenden zweiten Bereich (L4) aufweist, wobei der erste Bereich (L3) sich stromabwärts an den Gehäuseanfang (24) anschließt und der zweite Bereich (L4) in radialer Richtung an die Schaufelspitzen der Fanschaufeln (101) des Fans (10) angrenzt, und wobei der divergente Querschnittsflächenverlauf im ersten Bereich (L3) ausgebildet ist.

3. Fangehäuse nach Anspruch 2, **dadurch gekennzeichnet, dass** die Querschnittsfläche des Strömungspfads im ersten Bereich (L3) der Innenraumfläche (27) angrenzend an den Gehäuseanfang (24) in Strömungsrichtung zunächst zunimmt und zum zweiten Bereich (L4) der Innenraumfläche hin wieder abnimmt.

4. Fangehäuse nach Anspruch 2 oder 3, **dadurch gekennzeichnet, dass** die Innenraumfläche (27) am Gehäuseanfang (24) einen ersten Radius (R1) aufweist, im ersten Bereich (L3) einen ersten maximalen Radius (R2) aufweist, und die Fanschaufeln (101) des Fans (10) einen zweiten maximalen Radius (R3) aufweisen, wobei
a) der erste Radius (R1) größer ist als der zweite maximale Radius (R3) und
b) der erste maximale Radius (R2) größer ist als der erste Radius (R1) und als der zweite maximale Radius (R3).

5. Fangehäuse nach einem der vorangehenden Ansprüche, **dadurch gekennzeichnet, dass** das Fangehäuse (2) angrenzend an den Gehäuseanfang (24) ein schallabsorbierendes Paneel (23) aufweist, das ausschließlich mit einer oder mehreren strukturellen Gehäusekomponenten (21) des Fangehäuses (2) verbunden ist, wobei der angrenzend an den Gehäuseanfang (24) divergente Querschnittsflächenverlauf zumindest teilweise im Bereich des Paneels (23) ausgebildet ist.

6. Triebwerksbaugruppe, die aufweist:
- ein Fangehäuse (2), das innenseitig eine Innenraumfläche (27) ausbildet, die einen Strömungspfad durch den Fan (10) des Turbofantriebwerks radial außen begrenzt, wobei das Fangehäuse (2) einen stromaufwärts angeordneten Gehäuseanfang (24) aufweist, und
- einen mit dem Fangehäuse (2) stromaufwärts verbundenen Triebwerkseinlauf (11), der stromaufwärts der Verbindung zwischen Fangehäuse (2) und Triebwerkseinlauf (11) über eine definierte Länge (L1a) einen Einlaufdiffusor (13, 14) ausbildet,
**dadurch gekennzeichnet,**
**dass** der Einlaufdiffusor (13, 14) in axialer Richtung in den Bereich des Fangehäuses (2) hinein kontinuierlich verlängert ist.

7. Triebwerksbaugruppe nach Anspruch 6, **dadurch gekennzeichnet, dass** die Innenraumfläche (27) des Fangehäuses (2) unmittelbar angrenzend an den Gehäuseanfang (24) einen divergenten Querschnittsflächenverlauf des Strömungspfads realisiert und dabei den Einlaufdiffusor (13), den der Triebwerkseinlauf (11) bildet, in den Bereich des Fangehäuses (2) verlängert.

8. Triebwerksbaugruppe nach Anspruch 7, **dadurch gekennzeichnet, dass** das Fangehäuse (2) an der Innenraumfläche (27) einen ersten Bereich (L3) und einen sich daran in axialer Richtung anschließenden zweiten Bereich (L4) aufweist, wobei der erste Bereich (L3) sich stromabwärts an den Gehäuseanfang (24) anschließt und der zweite Bereich (L4) in radialer Richtung an die Schaufelspitzen der Fanschaufeln (101) des Fans (10) angrenzt, und wobei der divergente Querschnittsflächenverlauf im ersten Bereich (L3) ausgebildet ist, wobei die Querschnittsfläche im ersten Bereich (L3) der Innenraumfläche (27) angrenzend an den Gehäuseanfang (24) in Strömungsrichtung zunächst zunimmt und zum zweiten Bereich (L4) der Innenraumfläche (27) hin wieder abnimmt.

9. Triebwerksbaugruppe nach Anspruch 8, **dadurch gekennzeichnet, dass** die Innenraumfläche (27) am Gehäuseanfang (24) einen ersten Radius (R1) aufweist, im ersten Bereich (L3) einen ersten maximalen Radius (R2) aufweist, und die Fanschaufeln (101) des Fans (10) einen zweiten maximalen Radius (R3) aufweisen, wobei
a) der erste Radius (R1) größer ist als der zweite maximale Radius (R3) und
b) der erste maximale Radius (R2) größer ist als der erste Radius (R1) und als der zweite maximale Radius (R3).

10. Fangehäuse nach einem der Ansprüche 7 bis 9, **dadurch gekennzeichnet, dass** das Fangehäuse (2) angrenzend an den Gehäuseanfang (24) ein schallabsorbierendes Paneel (23) aufweist, das ausschließlich mit einer oder mehreren strukturellen Gehäusekomponenten (21) des Fangehäuses (2) verbunden ist, wobei der angrenzend an den Gehäuseanfang (24) divergente Querschnittsflächenverlauf zumindest teilweise im Bereich des Paneels (23) ausgebildet ist.

11. Triebwerksbaugruppe nach Anspruch 6, **dadurch gekennzeichnet, dass**
- das Fangehäuse (2) am Gehäuseanfang (24) eine erste Befestigungsstruktur (22a) zur Verbindung mit dem Triebwerkeinlauf (11) aufweist,
- der Triebwerkseinlauf (11) ein stromabwärts angeordnetes Einlaufende (15) ausbildet,
- der Triebwerkseinlauf (11) am Einlaufende (15) eine zweite Befestigungsstruktur (22b) zur Verbindung mit dem Fangehäuse (2) aufweist,
- wobei die miteinander verbundenen ersten und zweiten Befestigungsstrukturen (22a, 22b) eine Verbindungsstruktur (22) ausbilden, an der das Einlaufende (15) des Triebwerkseinlaufs (11) und der Gehäuseanfang (24) des Fangehäuses (2) miteinander verbunden sind,
- der Triebwerkseinlauf (11) stromabwärts des Einlaufendes (15) eine Verlängerungsstruktur (23') ausbildet, die den Einlaufdiffusor (14) in axialer Richtung verlängert, und
- die Verlängerungsstruktur (23') im zusammengebauten Zustand sich stromabwärts der axialen Position der Verbindungsstruktur (22) erstreckt, so dass der Einlaufdiffusor (14) in axialer Richtung in den Bereich des Fangehäuses (2) hinein verlängert ist.

12. Triebwerksbaugruppe nach Anspruch 11, **dadurch gekennzeichnet, dass** die Verlängerungsstruktur (23') durch ein schallabsorbierendes Paneel gebildet ist.

13. Triebwerksbaugruppe nach Anspruch 11 oder 12, **dadurch gekennzeichnet, dass** das Fangehäuse (2) an der Innenraumfläche (28) einen zweiten Bereich (L4) aufweist, der in radialer Richtung an die Fanschaufeln (101) des Fans (10) angrenzt, wobei die Verlängerungsstruktur (23') des Triebwerkseinlaufs (11) sich in axialer Richtung maximal bis zu diesem zweiten Bereich (L4) erstreckt.

14. Triebwerksbaugruppe nach einem der Ansprüche 11 bis 13, **dadurch gekennzeichnet, dass** erste Befestigungsstruktur (22a) und die zweite Befestigungsstruktur (22b) jeweils Flansche sind und im verbundenen Zustand eine Flanschverbindung (22) bilden.

15. Triebwerksbaugruppe nach einem der Ansprüche 6 bis 14, **dadurch gekennzeichnet, dass** die Verlängerung des Einlaufdiffusors (12, 14) in axialer Richtung in den Bereich des Fangehäuses (2) hinein derart ausgebildet ist, dass der Einlaufdiffusor (12, 14) einen kontinuierlich divergenten Querschnittsflächenverlauf im Übergangsbereich zwischen dem Triebwerkseinlauf (11) und dem Fangehäuse (2) aufweist.
